(19) Europäisches Patentamt
European Patent Office
Office européen des brevets

(11) Veröffentlichungsnummer: **0 042 486**
**A1**

(12) **EUROPÄISCHE PATENTANMELDUNG**

(21) Anmeldenummer: **81103571.6**

(22) Anmeldetag: **11.05.81**

(51) Int. Cl.³: **C 10 L 1/22**
C 10 M 1/32, C 09 B 29/42
//C09B29/01, C09B29/52

(30) Priorität: **06.06.80 DE 3021294**

(43) Veröffentlichungstag der Anmeldung:
**30.12.81 Patentblatt 81/52**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Loeffler, Hermann**
**Haydnstrasse 23**
**D-6720 Speyer(DE)**

(54) **Verfahren zum Färben von Belagmassen, organischen Lösungsmitteln und Mineralölprodukten und neue Farbstoffe.**

(57) Die Erfindung betrifft ein Verfahren zum Färben von Belagmassen, organischen Lösungsmitteln und Mineralölprodukten, das dadurch gekennzeichnet ist, daß man als Farbstoffe Verbindungen der allgemeinen Formel I

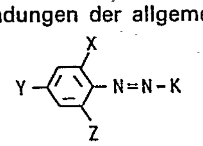

1

verwendet, in der
K ein Rest der Formel

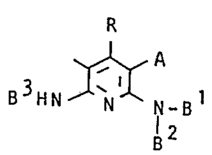

oder

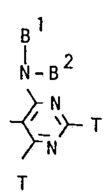

,

einer der Reste
X oder Y eine $C_2$- bis $C_{19}$-Carbonester-, $C_3$- bis $C_{19}$-Carbonamid-, $C_2$- bis $C_{18}$-Sulfonamid- oder $C_1$- bis $C_8$-Alkylsulfongruppe bedeuten und die restlichen Substituenten
X, Y und Z Wasserstoff, Brom oder Methyl und
Y darüberhinaus auch Nitro sind, wobei
A Cyan oder Carbamoyl,
$B^1$, $B^2$ und $B^3$ unabhängig voneinander Wasserstoff oder einen aliphatischen, cycloaliphatischen, araliphatischen oder aromatischen Rest,
$N$-$B^1$ einen gesättigten heterocyclischen Rest,
$B^2$
R Wasserstoff oder $C_1$- bis $C_3$-Alkyl, einer der Reste
T einen Rest der Formel-$N$-$B^1$
$B^2$
und der andere Rest T Wasserstoff oder $C_1$- bis $C_4$-Alkyl oder Phenyl bedeuten.

Man erhält so gefärbte Produkte mit guten Echtheiten.

EP 0 042 486 A1

Verfahren zum Färben von Belagmassen, organischen Lösungsmitteln und Mineralölprodukten und neue Farbstoffe

Die Erfindung betrifft ein Verfahren zum Färben von Belagmassen, organischen Lösungsmitteln und Mineralölprodukten, das dadurch gekennzeichnet ist, daß man als Farbstoffe Verbindungen der allgemeinen Formel I

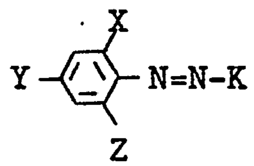 I

verwendet, in der

K ein Rest der Formel

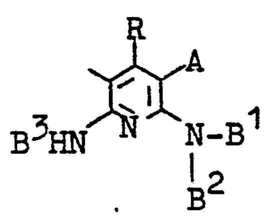 oder 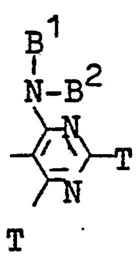 ,

einer der Reste

X oder Y eine $C_2$- bis $C_{19}$-Carbonester-, $C_3$- bis $C_{19}$-Carbonamid-, $C_2$- bis $C_{18}$-Sulfonamid- oder $C_1$- bis $C_8$-Alkylsulfongruppe bedeuten und die restlichen Substituenten

X, Y und Z Wasserstoff, Brom oder Methyl und

Y darüberhinaus auch Nitro sind, wobei

A Cyan oder Carbamoyl,

$B^1$, $B^2$ und $B^3$ unabhängig voneinander Wasserstoff oder einen aliphatischen, cycloaliphatischen, araliphatischen oder aromatischen

Rest,

$\underset{B^2}{N-B^1}$ einen gesättigten heterocyclischen Rest,

R Wasserstoff oder $C_1$- bis $C_3$-Alkyl, einer der Reste

T einen Rest der Formel $-\underset{B^2}{N-B^1}$ und der andere Rest T

Wasserstoff oder $C_1$- bis $C_4$-Alkyl oder Phenyl bedeuten.

Reste R sind neben Wasserstoff beispielsweise Äthyl, n- oder i-Propyl und vorzugsweise Methyl.

Neben Wasserstoff kommen für $B^1$ und $B^3$ z.B. die folgenden Substituenten in Betracht: Alkyl mit 1 bis 18 C-Atomen, durch Hydroxy, Cyan, Alkoxy mit 1 bis 8 C-Atomen, Phenoxy, Phenoxyäthoxy oder Benzyloxy substituiertes $C_2$- bis $C_3$-Alkyl, Cyclohexyl, Norbornyl, Phenylhydroxyäthyl, gegebenenfalls durch Chlor, Methyl, Trifluormethyl, Pyrrolidonyl, Hydroxy, Methoxy oder Äthoxy substituiertes Phenyl, $C_5$- bis $C_{12}$-Polyalkoxyalkyl, $C_4$- bis $C_9$-Hydroxypolyalkoxyalkyl, $C_1$- bis $C_8$-Alkanoyloxy-$C_2$- bis $C_6$-alkyl, $C_7$- bis $C_{11}$-Aroyloxy-$C_2$- bis $C_6$-Alkyl, $C_1$- bis $C_{10}$-Alkoxycarbonyloxy-$C_2$- bis $C_{10}$-alkyl, $C_1$- bis $C_{10}$-Alkoxycarbonyloxy-$C_4$- bis $C_7$-polyalkoxyalkyl, $C_1$- bis $C_8$-Alkylaminocarbonyloxy-$C_2$- bis $C_6$-alkyl, $C_1$- bis $C_8$-Alkoxycarbonyl-$C_2$- bis $C_7$-alkyl sowie $C_1$- bis $C_{18}$-Alkanoyl oder $C_1$- bis $C_8$-Alkylsulfonyl.

Als Reste $B^1$ und $B^3$ kommen im einzelnen außer den schon genannten z. B. in Betracht:

1. gegebenenfalls substiuierte Alkylreste:

$CH_3$, $C_2H_5$, n- oder i-$C_3H_7$, n- oder i-$C_4H_9$, $CH-C_2H_5$,
$\quad$ $CH_3$

$C_2H_4CH-CH_3$, $CH-CH-CH_3$, 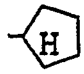 , 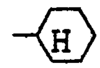, $CH_2-CH-C_2H_5$,
$\quad$ $CH_3$ $\quad$ $CH_3CH_3$ $\quad$ $C_2H_5$

$CH(C_3H_7)_2$, $CH-C_4H_9$-(n), $C_6H_{13}$-(n), $CH_2CH-C_4H_9$-(n),
$\quad$ $C_2H_5$ $\quad$ $C_2H_5$

$C_8H_{17}$-(n), $CH-C_3H_6-CH-CH_3$, $C_{10}H_{21}$-(n), $C_{12}H_{25}$-(n),
$\quad$ $CH_3$ $\quad$ $CH_3$

$C_{13}H_{17}$-(n), $C_{14}H_{29}$-(n), $C_{18}H_{37}$-(n), $C_2H_4OH$, $C_3H_6OH$,

$CH-CH_2OH$, $CH_2-CH(OH)CH_3$, $C_4H_8OH$, $C_2H_4CH-CH_3$,
$CH_3$ $\quad$ $CH_3$ $\quad$ $OH$ $CH_3$

$CH-CH_2OH$, $CH-C_2H_4OH$, $C_6H_{12}OH$, $CH-C_3H_6-C-CH_3$,
$C_2H_5$ $\quad$ $CH_3$ $\quad$ $OH$

$C_2H_4OC_2H_4OH$, $C_3H_6OC_4H_8OH$, $C_3H_6OC_6H_{12}OH$, $C_8H_{16}CH=CHC_7H_{14}OH$,

$CH_2CH-$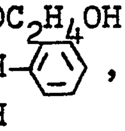 , $(CH_2)_2CN$, $(CH_2)_5CN$, $(CH_2)_6CN$, $(CH_2)_7CN$,
$\quad$ $OH$

$(CH_2)_2O(CH_2)_2CN$, $(CH_2)_3O(CH_2)_2CN$, $(CH_2)_2O(CH_2)_2O(CH_2)_2CN$, $(CH_2)_3OC_2H_4OCH_3$, $(CH_2)_3OC_2H_4OC_2H_5$, $(CH_2)_3O(CH_2)_6OH$, $(CH_2)_3OC_2H_4OCH(CH_3)_2$, $(CH_2)_3OC_2H_4OC_4H_9$, $(CH_2)_3OC_2H_4OCH_2C_6H_5$, $(CH_2)_3OC_2H_4OC_2H_4C_6H_5$,

$(CH_2)_3OC_2H_4O-$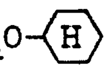, $(CH_2)_3OC_2H_4OC_6H_5$, $(CH_2)_3OCH-CH_2OCH_3$,
$\quad$ $CH_3$

$(CH_2)_3OCHCH_2OC_4H_9$, $(CH_2)_3OCHCH_2OCH_3$, $(CH_2)_3OCHCH_2OC_2H_5$
$\quad$ $CH_3$ $\quad$ $CH_3$ $\quad$ $CH_3$

und die entsprechenden Reste, bei denen die Gruppierungen $-O(CH_2)_2-$, $-OCH_2CH-$ oder $-OCH-CH_2-$
$\quad$ $CH_3$ $\quad$ $CH_3$

zwei- oder dreimal vorhanden sind,

$CH_2CH_2OCH_3$, $CH_2CH_2OC_2H_5$, $CH_2CH_2OC_3H_7$, $CH_2CH_2OC_4H_9$, $CH_2CH_2OC_6H_5$, $(CH_2)_3OCH_3$, $(CH_2)_3OC_2H_5$, $(CH_2)_3OC_3H_7$, $(CH_2)_3OC_4H_9$, $(CH_2)_3OCH_2\underset{C_2H_5}{CH}C_4H_9$, $(CH_2)_3OC_6H_{13}$, $(CH_2)_3OC_8H_{17}$, $(CH_2)_3OC_9H_{19}$, $(CH_2)_3OCH_2C_6H_5$, $(CH_2)_3OC_2H_4C_6H_5$, $(CH_2)_3OC_6H_5$, $-\underset{CH_3}{CH}CH_2OCH_3$, $\underset{CH_3}{CH}CH_2OC_4H_9$, $\underset{CH_3}{CH}CH_2OC_6H_5$, $\underset{CH_3}{CH}CH_2OCH_2C_6H_5$, $CH_2\underset{CH_3}{CH}OCH_3$, $CH_2\underset{CH_3}{CH}-OC_2H_5$, $CH_2\underset{CH_3}{CH}-OC_4H_9$, $CH_2\underset{CH_3}{CH}-OC_2H_4C_6H_5$, $CH_2\underset{CH_3}{CH}-OC_6H_5$,

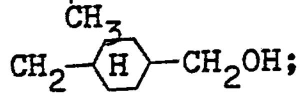;

2. gegebenenfalls substituierte Cyclo- und Polycycloalkylreste:

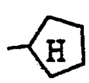, 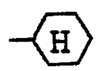, 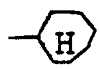, 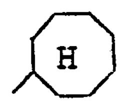, 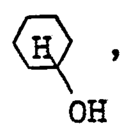, 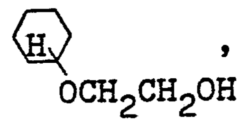,

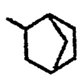, 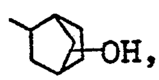, 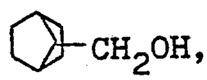, 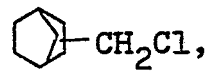,

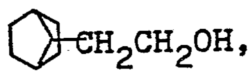, 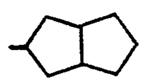, 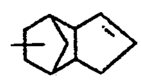, 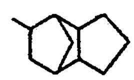,

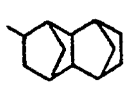, 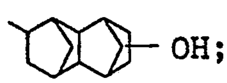;

3. gegebenenfalls substituierte Phenylreste: $C_6H_5$, $C_6H_4CH_3$, $C_6H_3(CH_3)_2$, $C_6H_4OCH_3$, $C_6H_4OC_2H_5$, $C_6H_4OC_4H_9$, $C_6H_4OCH_2CH_2OH$ oder $C_6H_4Cl$;

4. die Reste: $CH_2CH{=}CH_2$, $CH_2COOCH_3$, $(CH_2)_5COOCH_3$, $(CH_2)_5COOC_2H_5$, $(CH_2)_5COOC_4H_9$, $(CH_2)_5COOCH_2\underset{C_4H_9}{\overset{C_2H_5}{CH}}$, $(CH_2)_n$- 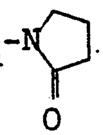, wobei n = 2, 3, 4 oder 6 ist.

5. Acyloxyreste: $(CH_2)_2OCHO$, $(CH_2)_2OCOCH_3$, $(C_2H_4O)_2CHO$, $(C_2H_4O)_2COCH_3$, $(CH_2)_2OCOC_3H_7$, $(CH_2)_2OCO\underset{C_4H_9}{CH}\text{-}C_2H_5$, $(CH_2)_2OCOC_6H_5$, $(CH_2)_2OCOC_6H_4CH_3$, $(CH_2)_2OCOC_6H_4Cl$, $(CH_2)_2OCOC_{10}H_7$, $(CH_2)_2OCONHCH_3$, $(CH_2)_2OCONHC_4H_9$, $(CH_2)_2OCONHCH_2\underset{C_4H_9}{CH}\text{-}C_2H_5$, $(CH_2)_2OCO_2C_2H_5$, $(CH_2)_2OCO_2C_3H_7(i)$, $(CH_2)_2OCO_2C_4H_9$, $(CH_2)_2OCO_2CH_2\underset{C_2H_5}{CH}C_4H_9$, $(CH_2)_2OCO_2$- 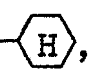, $(CH_2)_2OCO_2$- 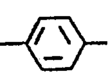 $-C(CH_3)_3$ sowie die Reste, welche die Gruppe $(C_2H_4O)$ zwei- oder dreimal enthalten.

6. Acylreste: CHO, $CH_3CO$, $C_2H_5CO$, $C_3H_7CO$, $C_4H_9\underset{C_2H_5}{CH}\text{-}CO$, $CH_3C_6H_4CO$, $C_6H_5OCH_2CO$, $CH_3SO_2$, $C_2H_5SO_2$ oder $CH_3C_6H_4SO_2$.

Für $B^2$ kommen im wesentlichen die bereits für $B^1$ genannten $C_1$- bis $C_8$-Alkylreste in Betracht, die noch durch Hydroxy oder $C_1$- bis $C_4$-Alkoxy substituiert sein können. Vorzugsweise ist $B^2$ Wasserstoff.

Bevorzugte Substituenten sind beispielsweise: Wasserstoff, $CH_3$, $C_2H_5$, n- oder i-$C_3H_7$, n- oder i-$C_4H_9$, $C_6H_{13}$, $CH_2\underset{C_2H_5}{CH}-C_4H_9$-(n), $C_8H_{17}$-(n), $C_{10}H_{21}$-(n), $C_{12}H_{25}$-(n), $C_{13}H_{27}$-(n), $(CH_2)_6OH$, $\underset{CH_3}{CH}(CH_2)_3\underset{OH}{C}(CH_3)_2$, $(CH_2)_2O(CH_2)_2OH$, $(CH_2)_3O(CH_2)_4OH$, $(CH_2)_3O(CH_2)_6OH$, $CH_2CH_2OCH_3$, $CH_2CH_2OC_2H_5$, $CH_2CH_2OC_4H_9$, $(CH_2)_3OCH_3$, $(CH_2)_3OC_2H_5$, $(CH_2)_3OC_3H_7$, $(CH_2)_3OC_4H_9$,

$(CH_2)_3$-O 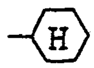 , $(CH_2)_3OCH_2$ 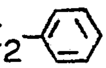 , $(CH_2)_3O$ 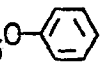 ,

$(CH_2)_2O$ 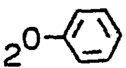 , $(CH_2)_3OC_2H_4OCH_3$, $(CH_2)_3OC_2H_4OC_4H_9$,

$(CH_2)_3OC_2H_4OC_6H_5$, 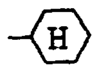 , 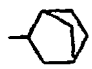 , $C_6H_4OCH_3$ oder $C_6H_4OC_2H_4OH$.

Reste $N\begin{matrix}B^1\\B^2\end{matrix}$ sind beispielsweise:

Pyrrolidino, Piperidino, Morpholino, Piperazino oder Hexamethylenimino.

Carbonestergruppen X oder Y sind beispielsweise: $COOCH_3$, $COOC_2H_5$, $COOC_2H_4Cl$, $COO(CH_2)_2CH_3$-(n) und -(i), $COO(CH_2)_3Cl$, $COOCH_2-CH=CH_2$, $COO\underset{CH_3}{CH}-CH_2Cl$, $COO(CH_2)_3CH_3$(n) und -(i), $COO-\underset{CH_3}{CH}-C_2H_5$, $COO(CH_2)_4Cl$, $COO(CH_2)_4CH_3$-(n) und -(i), $COOCH_2C(CH_3)_3$, $COO(CH_2)_5CH_3$, $COO\underset{CH_3}{CH}(CH_2)_2CH_3$, $COO\underset{CH_3}{C}HCH_2CH=CH_2$, $COOCH_2\underset{CH_3}{C}HCH_2CH_3$, $COOCH_2-\underset{CH_3}{CH}-\underset{CH_3}{CH}-CH_3$,

$COO(CH_2)_6CH_3$-(n), $COOCH_2$-CH-$(CH_2)_2CH_3$, $COO(CH_2)_7CH_3$-(n),
$CH_3$

$COOCH_2CH(CH_2)_3CH_3$, $COO(CH_2)_8CH_3$-(n) und (i), $COOC_{13}H_{27}$(n) oder (i)
$C_2H_5$

$COO(CH_2)_9CH_3$-(n) und -(i), $COO(CH_2)_{11}CH_3$-(n),
$COO(CH_2)_{15}CH_3$-(n), $COO(CH_2)_{17}CH_3$-(n), $COO(CH_2)_2CH$ ⟨ $OCH_3$, $CH_3$ ⟩,

COO-⟨H⟩, $COO(CH_2)_3OCOCH_3$, $COO(CH_2)_2OC_6H_5$, $COO(CH_2)_2OH$,
$COO(CH_2)_3OH$, $COOCH_2$-CHOH, $COO(CH_2)_2$CHOH, $COO(CH_2)_5OH$,
$CH_3$ $CH_3$ $CH_3$

$CH_3$
$COO(CH_2)_2$C-OH, $COOCH_2C(CH_3)_2CH_2OH$, $COO(CH_2)_2CH(CH_2)_2OH$,
$CH_3$ $CH_3$

$COO(CH_2)_6OH$, $COOCH(CH_2)_2$CHOH, COOCH-$(CH_2)_3$CHOH,
$CH_3$ $CH_3$ $CH_3$ $CH_3$ $CH_3$

$COOCH_2C(C_2H_5)_2CH_2OH$, $COOCH_2CCH_2OH$, $COOCH_2C(CH_3)_2CH$ ⟨ $CH(CH_3)_2$, OH ⟩,
$C_3H_7$

$COO(C_2H_4O)_2H$, $COO(C_2H_4O)_3H$, $COO(CH_2)_{10}OH$, $COOCH_2CHCH_2OH$,
OH

$CH_2OH$ $CH_2OH$
$COOCH_2CH(CH_2)_2OH$, $COOCH_2C$-$CH_3$, $COOCH_2C$-$C_2H_5$,
OH $CH_2OH$ $CH_2OH$

$COO(CH_2)_2OCH_3$, $COOCH_2CHOCH_3$, $COO(CH_2)_2OC_2H_5$,
$CH_3$

$COO(CH_2)_2OC_3H_7$, $COO(CH_2)_2O(CH_2)_3CH_3$, $COO(CH_2)_2CH$ ⟨ $OCH_3$, $CH_3$ ⟩,

$COOCH_2CHOCH_2CH$-OH, $COOCHCH_2OCH_2CHOH$, $COOCHCH_2OCH_2CHOH$,
$CH_3$ $CH_3$ $CH_3$ $CH_3$ $C_2H_5$ $C_2H_5$

$COO(C_2H_4O)_2CH_3$, $COO(C_2H_4O)_2C_2H_5$, $COO(C_2H_4O)_2(CH_2)_3CH_3$, und die entsprechenden Reste, welche die Gruppe $-C_2H_4O-$ dreimal oder viermal enthalten.

Als N-Substituenten der Carbon- oder Sulfonamide kommen die unter $B^1$ genannten Reste in Betracht.

Zur Herstellung der Farbstoffe der Formel I kann man eine Diazoverbindung von Aminen der Formel II

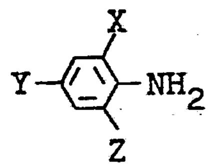 II

mit Kupplungskomponenten der Formel KH umsetzen, wobei K, X, Y und Z die genannte Bedeutung haben.

Die Diazotierung der Amine erfolgt wie üblich. Die Kupplung wird ebenfalls wie üblich in wäßrigem Medium gegebenenfalls unter Zusatz von Lösungsmitteln oder Tensiden bei stark bis schwach saurer Reaktion durchgeführt.

Bevorzugt für das erfindungsgemäße Verfahren sind Farbstoffe, die den Formeln

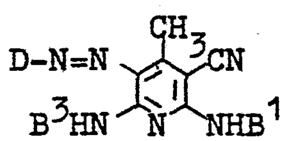 , 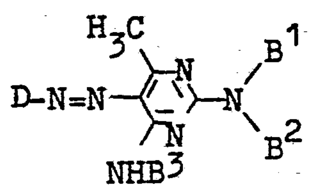 oder

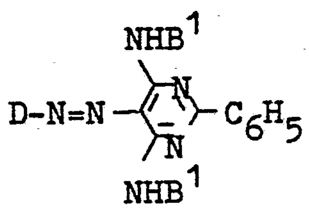

entsprechen, wobei $B^1$, $B^2$ und $B^3$ die angegebene Bedeutung haben und D ein Rest der Formeln

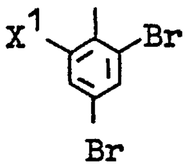,

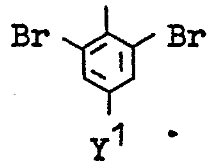

und insbesondere

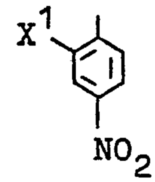

ist, wobei

$X^1$ eine $C_3$- bis $C_{19}$-Carbonester-, -Carbonamid- oder -Sulfonamidgruppe ist.

Die Erfindung betrifft weiterhin neue Verbindungen der allgemeinen Formel III

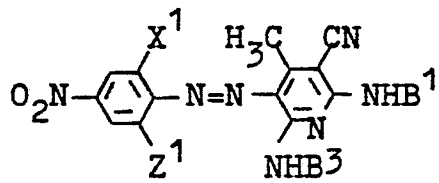

in der

$B^1$, $B^3$ und $X^1$ die angegebene Bedeutung haben und

$Z^1$ Wasserstoff oder Halogen ist, mit der Maßgabe, daß die Summe der C-Atome der Reste $B^1$, $B^3$ und $X^1$ $>$ 10 ist und sie zusammen 1 bis 3 OH-Gruppen tragen.

Ein Teil der Verbindungen der Formel I ist zum Färben und Bedrucken von Polyestermaterialien oder von Gemischen aus Polyester- und Baumwollematerialien bekannt.

Überraschenderweise wurde nun gefunden, daß die Verbindungen der Formel I außerordentlich hohe Löslichkeiten in den verschiedensten organischen Lösungsmitteln

haben und daß sie somit als Farbmittel dafür sowie für Oberflächenbeläge und Mineralölprodukte geeignet sind. Hervorzuheben ist die für metallfreie Verbindungen sehr gute Lichtechtheit in diesen Medien.

Die Farbstoffe der Formel I können in ihrer Löslichkeit durch Wahl der Reste X, Y, Z und $B^1$ entweder gezielt auf den Hauptanwendungsbereich oder aber für universelle Anwendung, d. h. hohe Löslichkeit in vielen gebräuchlichen Medien, abgestimmt werden.

Insbesondere die Farbstoffe der allgemeinen Formel III erfüllen diese Anforderung.

Als Lösungsmittel kommen insbesondere Toluol, Xylole, Ester, Ketone, Glykole, Glykoläther und Alkohole, im einzelnen beispielsweise Essigsäureäthylester, Essigsäurebutylester, Essigsäuremethoxy-äthylester, Aceton, Methyläthylketon, Methylglykol, Methyldiglykol, Butyldiglykol, Äthanol, Propanol, Butanol, Phthalsäurebutylester oder Phthalsäureäthylhexylester in Betracht.

In Druckfarben können die Verbindungen der Formel I die üblicherweise verwendeten Pigmente ersetzen, hierbei ergeben sich große Vorteile durch den Wegfall der bei Pigmenten notwendigen Finishoperationen und der Dispergierung. Die erzielbaren Echtheiten liegen auf mit den üblichen Pigmenten vergleichbarem Niveau.

Einzelheiten der Herstellung und der Verwendung können den Beispielen entnommen werden, in den sich Angaben über Teile und Prozente, sofern nicht anders vermerkt, auf das Gewicht beziehen.

dibutylester, 35 Teilen Äthylglykol und 34 Teilen Toluol und bedruckt mit der erhaltenen Lösung weißes Papier, so erhält man nach dem Trocknen einen roten Druck mit guter Lichtechtheit.

Beispiel 2

32,2 Teile 5-Nitro-anthranilsäure-i-decylester werden in 350 Teilen Toluol gelöst, mit Solekühlung auf 0 - 5 °C gebracht und durch tropfenweise Zugabe von 32 Teilen Nitrosylschwefelsäure (42 %) diazotiert. Nach beendeter Diazotierung (Prüfung durch DC) läßt man eine Lösung von 35 Teilen 2-[3'-(δ-Hydroxy-butoxy)-propylamino]-3-cyan-4-methyl-6-(3'-methoxy)-propylamino-pyridin in 10 Raumteilen konzentrierter Salzsäure und 200 Raumteilen Wasser zulaufen, wobei die Temperatur auf 10 - 15 °C ansteigt. Nach etwa einer Stunde ist die Kupplung beendet. Man trennt nun die unten sitzende wäßrige Phase von der den Farbstoff der Formel

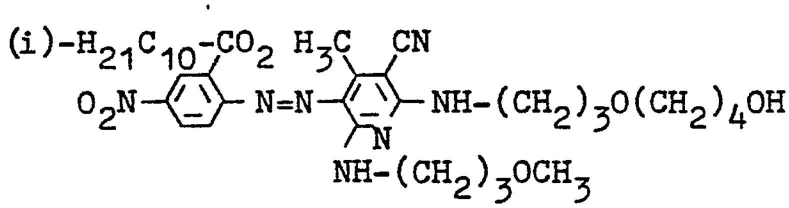

enthaltenden Toluollösung ab, rührt ein zweites Mal mit Wasser aus und befreit die Toluollösung durch kurze Destillation von Wasserresten. Bei dieser Operation kann die Lösung gleichzeitig auf die gewünschte Konzentration von 200 g Farbstoff/l eingestellt werden.

Beispiel 1

32,2 Teile 5-Nitroanthranilsäure-(i)-decylester werden mit 50 Raumteilen 100 %iger Essigsäure verdünnt und bei 0 - 5 °C tropfenweise mit 32 Teilen einer 42 %igen Nitrosylschwefelsäure versetzt. Nach einstündigem Rühren bei 0 - 5 °C läßt man die Diazoniumsalzlösung bei 10 - 15 °C in eine Lösung einfließen, die aus 43,1 Teilen 2,6-Bis-[3'-(δ-hydroxy-butoxy)-propylamino]-3-cyan-4-methyl-pyridin, 10 Raumteilen konzentrierter Salzsäure, 66 Teilen Eis, 400 Raumteilen Wasser und einem Teil eines Netzmittels bei Raumtemperatur bereitet wurde. Nach einer Stunde bei 15 °C ist die Kupplung beendet. Man saugt den Farbstoff ab, wäscht zunächst mit salzsaurem Wasser die überschüssige Kupplungskomponente aus, dann mit Wasser bis zur neutralen Reaktion des Filtergutes und trocknet die Paste bei 50 °C im Vakuum.

Der erhaltene Farbstoff der Formel

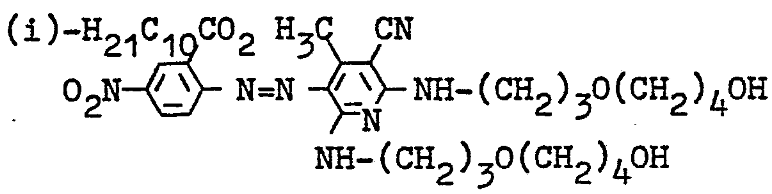

löst sich hervorragend in Lösungsmitteln wie Äthanol, Äthylacetat, Methyläthylketon, Äthylglykol oder Toluol mit roter Farbe und zeigt in Belagmassen gute Lichtechtheit.

Löst man 0,6 Teile dieses Farbstoffes in einem Gemisch aus 15 Teilen Collodiumwolle, 8 Teilen n-Butanol, 4 Teilen Phthalsäure-äthyl-hexylester, 4 Teilen Phthalsäure-Diese Lösung läßt man unter gutem Rühren auf 14 000 000 Teile Heizöl ab, das auf diese Weise rot gekennzeichnet wird.

Beispiel 3

Nach den Angaben des Beispiels 1 werden 27,0 Teile 5-Nitroanthranilsäure-6'-hydroxyhexylesters diazotiert und auf 43,1 Teile 2,6-Bis-[3'-(δ-hydroxybutoxypropylamino)-3-cyan-4-methyl-pyridin gekuppelt.

5 Teile des erhaltenen Farbstoffes der Formel

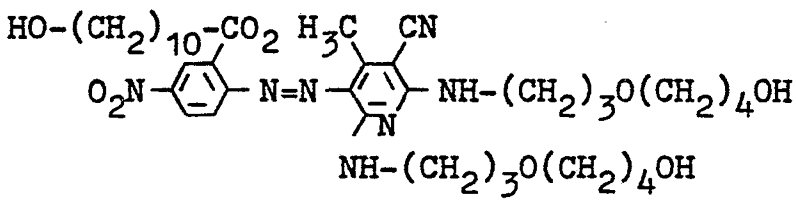

werden in einem Gemisch aus 10 Teilen eines Styrol-Maleinsäureester-Harzes als Bindemittel, 65 Teilen Äthanol, 10 Teilen Propanol und 10 Teilen Äthylglykol gelöst. Man erhält so eine rote Tinte auf Alkohol-Basis für Schreibgeräte.

Beispiel 4

Durch Kombination von 28,2 Teilen 5-Nitroanthranilsäure-6'-hydroxy-hexylester mit 28,0 Teilen 2-[γ-Methoxy-äthoxy—propylamino]-3-cyan-4-methyl-6-amino-pyridin nach den Angaben des Beispiels 1 wird ein Orange der Formel

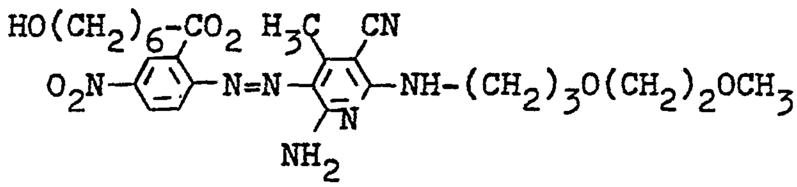

erhalten.

6 Teile dieses Farbstoffes werden in einem Gemisch aus 37 Teilen Äthylacetat, 37 Teilen Methyläthylketon und 20 Teilen eines Vinylchlorid-Vinylacetat-Copolymerisates (als Bindemittel) gelöst. Man erhält einen orange gefärbten Lack, der auf Aluminiumfolie helle Orangetöne ergibt.

Beispiel 5

40,5 Teile 3-Brom-5-nitro-anthranilsäure-ß-butoxy-ß'-äthoxy-äthylester liefern mit 28 Teilen 2-[3'-(γ-Hydroxy-butoxy)-propylamino]-3-cyan-4-methyl-6-amino-pyridin nach den Bedingungen des Beispiels 2 kombiniert eine rote Toluollösung die 200 g/l des Farbstoffes der Formel

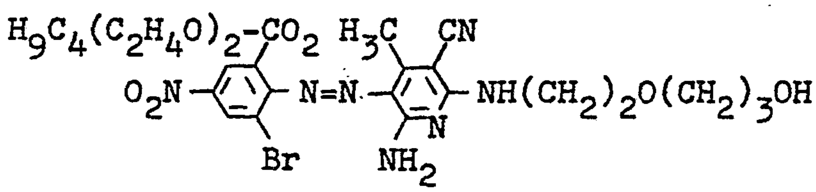

enthält.

25 Teile dieser konzentrierten Lösung werden in einem Gemisch aus 65 Teilen Toluol und 10 Teilen eines Styrol-Maleinsäureester-Harzes gelöst. Man erhält so ein Gemisch, das als Tinte für Filzschreiber geeignet ist.

Die in den folgenden Tabellen durch Angabe der Substituenten bezeichneten Farbstoffe können analog den angegebenen Methoden hergestellt und verwendet werden.

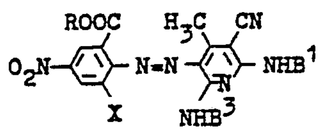

| Bsp. | X | R | $B^3$ | $B^1$ | Lösungs-farbe |
|---|---|---|---|---|---|
| 6 | H | $(CH_2)_6OH$ | $(CH_2)_3O(CH_2)_4OH$ | $(CH_2)_3O(CH_2)_4OH$ | rot |
| 7 | H | " | $(CH_2)_3CH_3$ | $(CH_2)_3O(CH_2)_4OH$ | " |
| 8 | H | " | 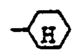 | " | " |
| 9 | H | " | $(CH_2)_3OCH_3$ | " | " |
| 10 | H | " | $(CH_2)_2OCH_3$ | $(CH_2)_3O(CH_2)_6OH$ | " |
| 11 | H | " | $(CH_2)_7CH_3$-(n) | $(CH_2)_2O(CH_2)_2OH$ | " |
| 12 | H | $(CH_2)_2O(CH_2)_2OH$ | " | $(CH_2)_3O(CH_2)_4OH$ | " |
| 13 | Br | " | $(CH_2)_3CH_3$-(n) | " | schar-lach |
| 14 | Br | " | $CH(CH_3)_2$ | " | " |

| Bsp. | X | R | $B^3$ | $B^1$ | Lösungs-farbe |
|---|---|---|---|---|---|
| 15 | Br | $(CH_2)_2O(CH_2)_2OH$ | $(CH_2)_3OCH_3$ | $(CH_2)_3O(CH_2)_4OH$ | scharlach |
| 16 | H | " | 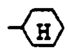 | " | rot |
| 17 | H | " | $(CH_2)_3OCH_2\overset{C_2H_5}{CH}(CH_2)_3CH_3$ | $(CH_2)_3OH$ | " |
| 18 | Br | " | H | $(CH_2)_3O(CH_2)_4OH$ | orange |
| 19 | " | $(CH_2)_2O(CH_2)_2OH$ | H | $(CH_2)_3O(CH_2)_2OC_6H_5$ | " |
| 20 | " | " | $(CH_2)_7CH_3$ | $(CH_2)_3OCH_3$ | schar-lach |
| 21 | Br | $CH_2\overset{OH}{CH}CH_2OH$ | H | $(CH_2)_3O(CH_2)_2OC_6H_5$ | orange |
| 22 | H | " | $(CH_2)_7CH_3$ | $(CH_2)_3OCH_2CH_3$ | rot |
| 23 | Br | " | $(CH_2)_3CH_3$-n | $(CH_2)_3O(CH_2)_4OH$ | scharlach |
| 24 | H | $C_{10}H_{21}$(i) | H | " | orange |
| 25 | H | $(CH_2)_9CH_3$-(n) | $(CH_2)_3O(CH_2)_4OH$ | $(CH_2)_3O(CH_2)_4OH$ | rot |

| Bsp. | X | R | $B^3$ | $B^1$ | Lösungsfarbe |
|---|---|---|---|---|---|
| 26 | Br | $(CH_2)_9CH_3$-(n) | H | $(CH_2)_3O(CH_2)_4OH$ | orange |
| 27 | H | " | $(CH_2)_3OCH_3$ | " | rot |
| 28 | Br | " | $(CH_2)_2O(CH_2)_2OH$ | $(CH_2)_2O(CH_2)_2OH$ | scharlach |
| 29 | Br | " | $(CH_2)_3OCH_3$ | $(CH_2)_3OCH_3$ | " |
| 30 | Br | " | $(CH_2)_3O(CH_2)_4OH$ | $(CH_2)_3O(CH_2)_4OH$ | " |
| 31 | Br | " | H | $(CH_2)_2O(CH_2)_2OH$ | orange |
| 32 | Br | " | $(CH_2)_3O(CH_2)_2OC_6H_5$ | $(CH_2)_2OH$ | scharlach |
| 33 | Br | " | $(CH_2)_3OCH_3$ | $(CH_2)_3OCH_3$ | " |
| 34 | Br | $C_{10}H_{21}$(i) | | $(CH_2)_3CH_3$ | " |
| 35 | Br | $(CH_2CH_2O)_2(CH_2)_3CH_3$ | $(CH_2)_3OCH_3$ | $(CH_2)_3O(CH_2)_4OH$ | rot |

| Bsp. | X | R | $B^3$ | $B^1$ | Lösungs-farbe |
|---|---|---|---|---|---|
| 36 | H | $(CH_2)_5CH_3$-(n) | $(CH_2)_3OCH_3$ | $(CH_2)_3O(CH_2)_4OH$ | rot |
| 37 | Br | " | " | " | scharlach |
| 38 | Br | " | $(CH_2)_3O(CH_2)_4OH$ | $(CH_2)_3O(CH_2)_4OH$ | " |
| 39 | Br | " | $(CH_2)_3OCH_3$ | $(CH_2)_3OCH_3$ | " |
| 40 | Br | $CH_2$-CH($CH_2CH_3$)-$(CH_2)_3CH_3$ | H | $(CH_2)_3O(CH_2)_4OH$ | orange |
| 41 | Br | " | $(CH_2)_3OCH_3$ | " | scharlach |
| 42 | Br | " | $(CH_2)_3O(CH_2)_4OH$ | " | " |
| 43 | H | $(CH_2CH_2O)_2(CH_2)_3CH_3$ | " | " | rot |
| 44 | Br | " | H | " | orange |
| 45 | H | $(CH_2)_{10}OH$ | $(CH_2)_3OCH_3$ | $(CH_2)_3O(CH_2)_4OH$ | rot |

| Bsp. | X | R | $B^3$ | $B^1$ | Lösungs-farbe |
|---|---|---|---|---|---|
| 46 | H | $(CH_2)_{10}OH$ | $(CH_2)_3CH_3$ | $(CH_2)_3O(CH_2)_4OH$ | rot |
| 47 | Br | " | $C_2H_5$<br>$(CH_2)_3OCH_2CH(CH_2)_3CH_3$ | $(CH_2)_2OCH_3$ | " |
| 48 | H | " | H | $(CH_2)_3O(CH_2)_2OCH_2CH_3$ | orange |
| 49 | H | " | H | $(CH_2)_3O(CH_2)_4OH$ | orange |
| 50 | Br | " | $(CH_2)_3OCH_3$ | " | scharlach |
| 51 | Br | " | $(CH_2)_3CH_3$ | " | " |
| 52 | Br | $(CH_2)_2OCH_3$ | $(CH_2)_3O(CH_2)_4OH$ | " | rot |
| 53 | Br | " | $(CH_2)_3OCH_3$ | " | " |
| 54 | Br | $C_2H_5$<br>$CH-CH_2CH=CH_2$ | " | " | " |
| 55 | H | " | $(CH_2)_3O(CH_2)_4OH$ | " | " |

| Bsp. | X | R | $B^3$ | $B^1$ | Lösungs-farbe |
|---|---|---|---|---|---|
| 56 | H | $(CH_2)_2O(CH_2)_3CH_3$ | $(CH_2)_6OH$ | $(CH_2)_3O(CH_2)_4OH$ | rot |
| 57 | H | " | $(CH_2)_3O(CH_2)_4OH$ | " | rot |
| 58 | H | " | H | " | orange |
| 59 | Br | " | H | " | " |
| 60 | H | $(CH_2)_3O(CH_2)_4OCH_3$ | $(CH_2)_3O(CH_2)_4OH$ | $(CH_2)_3O(CH_2)_4OH$ | rot |
| 61 | H | " | " | $(CH_2)_2O(CH_2)_2OH$ | " |
| 62 | H | " | H | $(CH_2)_3O(CH_2)_4OH$ | orange |
| 63 | Br | " | $(CH_2)_3OCH_3$ | " | scharlach |
| 64 | H | " | $(CH_2)_3O(CH_2)_4OH$ | $(CH_2)_6OH$ | rot |
| 64a | H | $C_{10}H_{21}(i)$ | H | $(CH_2)_3OCH_2-CH(C_2H_5)-C_4H_9$ | " |

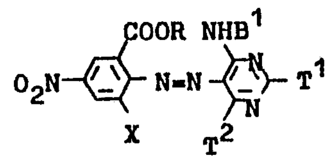

| Bsp. | X | R | $B^1$ | $T^2$ | $T^1$ | Lösungsfarbe |
|---|---|---|---|---|---|---|
| 65 | H | $(CH_2)_9CH_3$ | $(CH_2)_3OCH_3$ | $(CH_2)_3O(CH_2)_4OH$ | 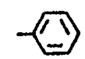 | rot |
| 66 | Br | " | " | " | " | scharlach |
| 67 | Br | " | " | $(CH_2)_3OCH_3$ | " | " |
| 68 | H | " | $(CH_2)_3O(CH_2)_4OH$ | $(CH_2)_3O(CH_2)_4OH$ | " | rot |
| 69 | Br | $(CH_2)_{10}OH$ | $(CH_2)_3OCH_3$ | $(CH_2)_3OCH_3$ | " | scharlach |
| 70 | H | " | " | $(CH_2)_3O(CH_2)_4OH$ | " | rot |

| Bsp. | X | R | $B^1$ | $T^2$ | $T^1$ | Lösungsfarbe |
|---|---|---|---|---|---|---|
| 71 | H | $(CH_2)_3O(CH_2)_3CH_3$ | $(CH_2)_3OCH_3$ | $(CH_2)_3O(CH_2)_4OH$ | 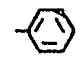 | rot |
| 72 | Br | $(CH_2)_2OCH_3$ | $(CH_2)_3OCH_3$ | $(CH_2)_3O(CH_2)_4OH$ | " | scharlach |
| 73 | H | $(CH_2)_6OH$ | $(CH_2)_3(CH_2)_4OH$ | $CH_3$ | $N(C_4H_9)_2$ | rot |
| 74 | H | $(CH_2)_{10}OH$ | $(CH_2)_2O(CH_2)_2OH$ | " | " | " |
| 75 | H | $(CH_2)_{10}OH$ | $(CH_2)_3O(CH_2)_4OH$ | $CH_3$ | 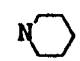 | rot |
| 76 | Br | $(CH_2)_3O(CH_2)_3CH_3$ | $(CH_2)_3O(CH_2)_3CH_3$ | " | 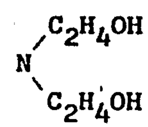 | " |
| 77 | H | " | " | $CH_3$ | " | " |

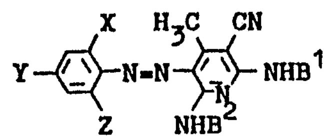

| Bsp. | X | Y | Z | $B^2$ | $B^1$ | Lösungsfarbe |
|---|---|---|---|---|---|---|
| 78 | $CO_2(CH_2)_9CH_3$ | Br | Br | $(CH_2)_3O(CH_2)_4OH$ | $(CH_3)_3O(CH_2)_4OH$ | gelb |
| 79 | $CO_2(CH_2CH_2O)_2(CH_2)_3CH_3$ | Br | Br | H | " | " |
| 80 | $CO_2(CH_2)_9CH_3$ | H | H | $(CH_2)_3O(CH_2)_4OH$ | " | " |
| 81 | " | Br | Br | $(CH_2)_3OCH_3$ | " | " |
| 82 | $CO_2(CH_2)_{17}CH_3$ | Br | Br | $(CH_2)_3OCH_3$ | $(CH_2)_3OH$ | " |
| 83 | " | Br | Br | " | $(CH_2)_3CH_3$ | " |
| 84 | Br | $CON(C_4H_9)_2$ | Br | H | $(CH_2)_3O(CH_2)_4OH$ | " |

| Bsp. | X | Y | Z | $B^2$ | $B^1$ | Lösungsfarbe |
|---|---|---|---|---|---|---|
| 85 | Br | $CON(C_4H_9)_2$ | Br | H | $(CH_2)_3OCH_2CH(C_2H_5)-C_4H_9$ | gelb |
| 86 | Br | " | Br | $(CH_2)_3OCH_3$ | $(CH_2)_3O(CH_2)_4OH$ | " |
| 87 | Br | " | Br | $(CH_2)_3O(CH_2)_4OH$ | " | " |
| 88 | Br | $SO_2N(C_4H_9)_2$ | Br | H | " | " |
| 89 | $CON(C_4H_9)_2$ | Br | Br | H | " | " |
| 90 | " | Br | Br | H | $(CH_2)_3O-CH_2CH(C_2H_5)-C_4H_9$ | " |
| 91 | " | Br | Br | $(CH_2)_3O(CH_2)_4OH$ | $(CH_2)_3O(CH_2)_2OH$ | " |

| Bsp. | X | Y | Z | $B^2$ | $B^1$ | Lösungsfarbe |
|---|---|---|---|---|---|---|
| 92 | $SO_2N(C_4H_9)_2$ | Br | Br | H | $(CH_2)_3O(CH_2)_2OH$ | gelb |
| 93 | " | Br | Br | $(CH_2)_3O(CH_2)_4OH$ | " | " |
| 94 | " | Br | Br | H | $(CH_2)_3O-CH_2-CH(C_2H_5)-C_4H_9$ | " |

Analog lassen sich auch die folgenden Verbindungen herstellen, die ähnliche färberische Eigenschaften haben.

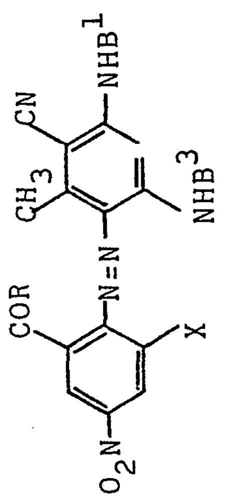

| Beisp. | X | R | $B^3$ | $B^1$ | Lösungsfarbe |
|---|---|---|---|---|---|
| 95 | H | $N(C_4H_9)_2$ | H | $(CH_2)_3O(CH_2)_4OH$ | orange |
| 96 | Br | $N(C_4H_9)_2$ | H | $(CH_2)_3OCH_2-CH(C_2H_5)-C_4H_9$ | " |
| 97 | H | $N(C_4H_9)_2$ | $(CH_2)_3O(CH_2)_4OH$ | $(CH_2)_3O(CH_2)_4OH$ | rot |
| 98 | H | " | $(CH_2)_3OCH_3$ | " | rot |
| 99 | Br | $NH-CH_2-CH(C_2H_5)-C_4H_9$ | " | " | scharlach |
| 100 | H | $NH-C_{12}H_{25}$ | $(CH_2)_3O(CH_2)_4OH$ | " | rot |
| 101 | H | $OC_{10}H_{21}(i)$ | $(CH_2)_3OCH_3$ | $(CH_2)_3O(CH_2)_4OH$ | rot |
| 102 | H | $OC_{13}H_{27}(i)$ | H | " | orange |
| 103 | H | " | $(CH_2)_3OCH_3$ | " | rot |
| 104 | H | " | $(CH_2)_3O(CH_2)_4OH$ | " | rot |

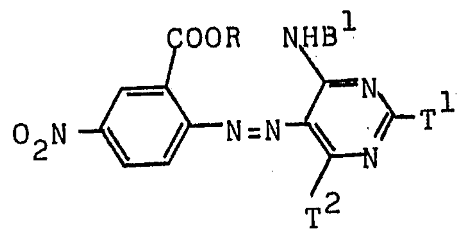

| Beisp. | R | $B^1$ | $T^1$ | $T^2$ | Lösungsfarbe |
|---|---|---|---|---|---|
| 105 | $C_{10}H_{21}(i)$ | $(CH_2)_3OCH_3$ | $C_6H_5$ | $(CH_2)_3O(CH_2)_4OH$ | rot |
| 106 | " | " | " | $(CH_2)_3OCH_3$ | rot |
| 107 | $C_{13}H_{27}(i)$ | " | " | " | rot |

Patentansprüche

1. Verfahren zum Färben von Belagmassen, organischen Lösungsmitteln und Mineralölprodukten, dadurch gekennzeichnet, daß man als Farbstoffe Verbindungen der allgemeinen Formel I

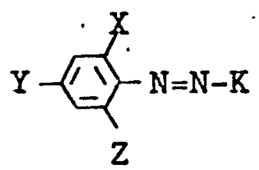

I

verwendet, in der

K ein Rest der Formel

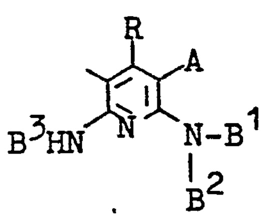

oder

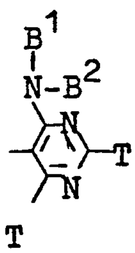

,

einer der Reste

X oder Y eine $C_2$- bis $C_{19}$-Carbonester-, $C_3$- bis $C_{19}$-Carbonamid-, $C_2$- bis $C_{18}$-Sulfonamid- oder $C_1$- bis $C_8$-Alkylsulfongruppe bedeuten und die restlichen Substituenten

X, Y und Z Wasserstoff, Brom oder Methyl und

Y darüberhinaus auch Nitro sind, wobei

A Cyan oder Carbamoyl,

$B^1$, $B^2$ und $B^3$ unabhängig voneinander Wasserstoff oder einen aliphatischen, cycloaliphatischen, araliphatischen oder aromatischen

Rest,

$\underset{|\atop B^2}{N-B^1}$ einen gesättigten heterocyclischen Rest,

R Wasserstoff oder $C_1$- bis $C_3$-Alkyl, einer der Reste

T einen Rest der Formel $\underset{|\atop B^2}{-N-B^1}$ und der andere Rest T Wasserstoff oder $C_1$- bis $C_4$-Alkyl oder Phenyl bedeuten.

2. Verfahren gemäß Anspruch 1, dadurch gekennzeichnet, daß man Farbstoffe verwendet, die den Formeln

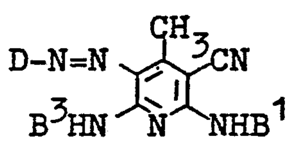

,

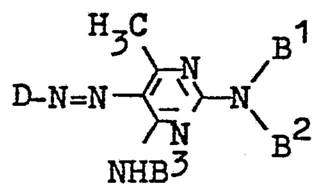

oder

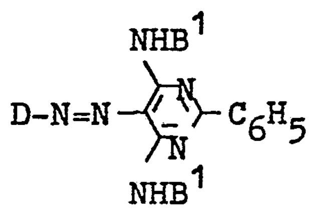

entsprechen, wobei $B^1$, $B^2$ und $B^3$ die angegebene Bedeutung haben und D ein Rest der Formeln

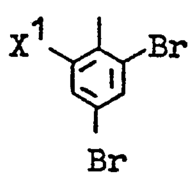

,

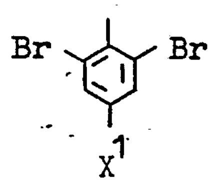

und insbesondere

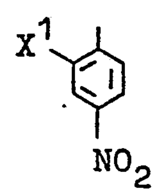

ist, wobei

$X^1$ eine $C_3$- bis $C_{19}$-Carbonester-, -Carbonamid- oder -Sulfonamidgruppe ist.

3. Farbstoffe der allgemeinen Formel

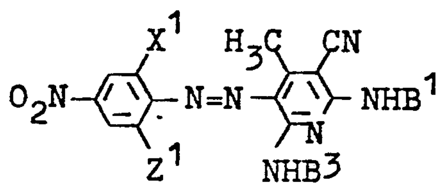

in der

$B^1$, $B^3$ und $X^1$ die angegebene Bedeutung haben und

$Z^1$ Wasserstoff oder Halogen ist, mit der Maßgabe, daß die Summe der C-Atome der Reste

$B^1$, $B^3$ und $X^1$ $>$10 ist und sie zusammen 1 bis 3 OH-Gruppen tragen.

0042486

Europäisches Patentamt

# EUROPÄISCHER RECHERCHENBERICHT

Nummer der Anmeldung
EP 81 10 3571

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | FR - A - 2 219 205 (BASF)<br>* Seite 1, Formel I; Seite 10, Zeilen 2-9; Seiten 18/19; Beispiele 127,148,149 *<br>& DE - A - 2 309 638<br>-- | 1,3 | C 10 L 1/22<br>C 10 M 1/32<br>C 09 B 29/42//<br>C 09 B 29/01<br>29/52 |
| X | FR - A - 2 212 389 (BASF)<br>* Seite 1; Seite 18, Beispiele 104,105 *<br>& DE - A - 2 263 458<br>-- | 3 | RECHERCHIERTE SACHGEBIETE (Int. Cl.³)<br>C 10 L 1/22<br>C 10 M 1/32<br>C 09 B 29/00-<br>29/01<br>29/36<br>29/42<br>29/52 |
| X | FR - A - 2 187 857 (BASF)<br>* Seiten 1,2; Seiten 25-27; Beispiele 152,153,174,175; Seiten 47-49; Beispiele 496,497,518, 519; Seiten 68-70; Beispiele 808,809,826,827; Seiten 90-92; Beispiele 1112,1113,1134,1135 *<br>& DE - A - 2 211 663<br>& DE - A - 2 226 933<br>& DE - A - 2 251 702<br>& DE - A - 2 258 823<br>& DE - A - 2 259 103<br>& DE - A - 2 259 684<br>-- | 3 | |
| | FR - A - 2 203 853 (BASF)<br>* Seite 1; Seite 9, Zeilen 9-13; Beispiel 1 *<br>& DE - A - 2 251 702<br>-- ./. | 1 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

X Der vorliegende Recherchenbericht wurde für alle Patentansprüche erstellt.

| Recherchenort | Abschlußdatum der Recherche | Prüfer |
|---|---|---|
| Den Haag | 06-10-1981 | GREEN |

Europäisches Patentamt

# EUROPÄISCHER RECHERCHENBERICHT

0042486

Nummer der Anmeldung

EP 81 10 3571

-2-

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| PA | EP - A - 0 018 567 (BASF)<br>* Seiten 1-3; Zeile 9; Seite 4, Zeile 20 - Seite 5, Zeile 3 *<br>---- | 1 | |
| | | | RECHERCHIERTE SACHGEBIETE (Int. Cl. 3) |

EPA Form 1503.2 06.78